# EUROPÄISCHE PATENTSCHRIFT

(11) **EP 3 374 120 B1**
(45) Veröffentlichungstag und Bekanntmachung des Hinweises auf die Patenterteilung: **05.02.2020**
(21) Anmeldenummer: 16801139.3
(22) Anmeldetag: 31.10.2016
(51) Int. Cl.: B23K 20/10

(54) **VERFAHREN ZUM SCHNEIDEN VON SCHNEIDGUT**
CUTTING METHOD
MÉTHODE DE DÉCOUPE

(30) Priorität: 09.11.2015 DE 102015222011
(43) Veröffentlichungstag der Anmeldung: 19.09.2018
(73) Patentinhaber: Schunk Sonosystems GmbH, 35435 Wettenberg (DE)
(72) Erfinder: WAGNER, Peter, 35435 Wettenberg (DE); FEY, Manuel, 35585 Blasbach (DE)
(74) Vertreter: advotec.
(86) Internationale Anmeldenummer: PCT/EP2016/076231
(87) Internationale Veröffentlichungsnummer: WO 2017/080862

(56) Entgegenhaltungen:
- DE-B3-102004 022 313
- "Schunk Ultrasonic Welding Systems MINIC - II", Schunk Sonosystems , 1. Februar 2001 (2001-02-01), XP002767075, Gefunden im Internet: URL:http://www.komtech.co.za/wp-content/up loads/pdfdownload/ultrasonicwelding/MINIC- II_E.pdf in der Anmeldung erwähnt

## Beschreibung

Die vorliegende Erfindung betrifft ein Verfahren zum Schneiden von vorzugsweise als stabförmiger Körper ausgebildetem Schneidgut mit einer Aufnahmeeinrichtung zur fixierten Aufnahme des Schneidguts, derart, dass ein abzutrennender Teil des Schneidguts eine als Gegenschneidkante ausgebildete Körperkante der Aufnahmeeinrichtung überragt, und mit einer Messereinrichtung mit einem relativ zur Aufnahmeeinrichtung bewegbaren Messer, das eine Messerschneidkante zur Ausführung eines Trennschnitts in einer Schneidbewegung an der Gegenschneidkante vorbei bewegt wird.

Aus dem Produktprospekt "Schunk Ultraschall-Schweißsysteme MINIC-II" der Schunk Sonosystems GmbH mit Druckdatum 02/2011 ist ein Verfahren zum Schneiden von stabförmigen Leitern bekannt, das in Kombination mit einer Ultraschallschweißvorrichtung eingesetzt wird, die eine als Verdichtungsraum ausgebildete Aufnahmeeinrichtung zur Aufnahme von miteinander zu einem Schweißknoten zu verbindenden Blankbereichen stabförmiger Leiter aufweist, wobei zur Ultraschallbeaufschlagung der Blankbereiche eine den Verdichtungsraum begrenzende Sonotrode verwendet wird, die zur Ausbildung des Schweißknotens dient. Die Messereinrichtung weist ein in einer Schneidbewegung an einer Gegenschneidkante des Verdichtungsraums vorbei bewegbares Messer auf, derart, dass ein abzutrennender Teil der zu einem Schneidknoten miteinander verbundenen Blankbereiche, der über die Gegenschneidkante des Verdichtungsraums hinausragt, abgetrennt wird.

Bei dem bekannten Verfahren wird die Messereinrichtung als sogenannter Schlechtteilschneider eingesetzt, welcher nach Detektierung eines fehlerhaft ausgeführten Schweißknotens die über den Schweißknoten miteinander verbundenen Leiter durchtrennen soll, um durch die Zerstörung des Schweißknotens eine Weiterverarbeitung von fehlerhaft miteinander verbundenen elektrischen Leitern auszuschließen.

Hierzu ist die zur Durchführung des Verfahrens eingesetzte Vorrichtung so ausgebildet, dass während der Herstellung des Schweißknotens im Verdichtungsraum die Prozessparameter oder auch die Geometrie des im Verdichtungsraum hergestellten Schweißknotens in-situ überprüft wird und bei Detektierung von Fehlern, also beispielsweise bei Überschreitung definierter Grenzwerte, automatisch die Messereinrichtung aktiviert wird. Bei dem bekannten Verfahren wird die Ultraschallbeaufschlagung der miteinander zu einem Schweißknoten zu verbindenden Blankbereiche der Leiter vor Durchführung des nachfolgenden Schneidvorgangs beendet, so dass also während des Schneidvorgangs keine Ultraschallbeaufschlagung der Leiter erfolgt.

Zur Betätigung der Messereinrichtung ist eine Antriebseinrichtung vorgesehen, mittels der eine Schneidbewegung und eine Rückstellbewegung des Messer der Messereinrichtung erfolgt. Die Antriebseinrichtung muss mittels eines Antriebsmotors die für die Durchführung des Schneidvorgangs erforderliche Antriebskraft erzeugen und mittels einer zur Übertragung der Antriebskraft ausreichend dimensionierten Getriebeeinrichtung auf das Messer zur Erzeugung der Schnittkraft übertragen. Da die Leiter nicht selten Leiterquerschnitte bis zu 30 mm² aufweisen, sind entsprechend hohe Schnittkräfte erforderlich, die eine entsprechende Dimensionierung des Antriebsmotors und der Getriebeeinrichtung verlangen.

Der vorliegenden Erfindung liegt die Aufgabe zugrunde, ein Verfahren vorzuschlagen, das das Schneiden von vorzugsweise als stabförmiger Körper ausgebildetem Schneidgut mit einer möglichst geringen Schnittkraft ermöglicht, um eine entsprechend kleine Dimensionierung des Antriebsmotors und der Getriebeeinrichtung zu ermöglichen.

Zur Lösung dieser Aufgabe weist das erfindungsgemäße Verfahren die Merkmale des Anspruchs 1 auf.

Erfindungsgemäß wird das Schweißgut zur Ausführung von Schwingungen während der Schneidbewegung mit Ultraschall beaufschlagt.

In Versuchen hat sich herausgestellt, dass eine Ultraschallbeaufschlagung des Schneidguts während der Schneidbewegung zu einer erheblichen Reduzierung der für die Durchführung des Schneidvorgangs erforderlichen Schnittkraft führt. Diese Erkenntnis gilt ganz grundsätzlich, so dass sich der vorteilhafte Effekt der Schnittkraftreduzierung infolge Ultraschallbeaufschlagung des Schneidguts während der Schneidbewegung als grundsätzlich unabhängig von dem besonderen Anwendungsfall erweist, so dass die Aufnahmeeinrichtung nicht wie bei dem vorstehend in Bezug genommenen Stand der Technik als Verdichtungsraum einer Ultraschallschweißvorrichtung ausgeführt sein muss, sondern ganz allgemein lediglich eine fixierte Aufnahme des Schneidguts mit Ausbildung einer Gegenschneidkante durch eine Körperkante der Aufnahmeeinrichtung ermöglichen muss. In Kombination mit der Messerschneidkante bildet die Gegenschneidkante eine zur Durchführung des Schneidvorgangs geeignete Schneidvorrichtung.

Wenn gemäß einem bevorzugten Ausführungsbeispiel die Ultraschallbeaufschlagung des Schneidguts mittelbar über eine Ultraschallbeaufschlagung der Aufnahmeeinrichtung erfolgt, ist eine besonders definierte Ultraschallbeaufschlagung des Schneidguts möglich.

Besonders bevorzugt ist es, wenn die Ultraschallbeaufschlagung quer, vorzugsweise unter einem Winkel von 90°, zur Richtung der Schneidbewegung erfolgt, so dass in Abhängigkeit von der Frequenz der Ultraschallbeaufschlagung bzw. der durch die Ultraschallbeaufschlagung induzierten, quer zur Schneidbewegung gerichteten Schwingungen eine alternierende Relativbewegung der Aufnahmeschneidkante in Richtung auf die Messerschneidkante und von der Messerschneidkante weg erfolgt. Hierdurch bilden sich mit der Frequenz der Ultraschallschwingung wiederholt temporäre Reaktionskräfte zwischen dem Schneidgut und der Messerschneidkante aus.

Als ganz besonders vorteilhaft hat sich der Einsatz des Verfahrens zum Schneiden von stabförmigen Körpern herausgestellt, die als Faserbündel oder Aderbündel, wie es insbesondere bei als Litzen ausgebildeten elektrischen Leitern der Fall ist, ausgebildet sind.

Als besonders vorteilhaft hat sich das erfindungsgemäße Verfahren herausgestellt, wenn die Aufnahmeeinrichtung als Verdichtungsraum zur Aufnahme von miteinander zu einem Schweißknoten zu verbindenden Blankbereichen von stabförmigen Leitern ausgebildet ist, mit einer zur Ultraschallbeaufschlagung der Blankbereiche den Verdichtungsraum begrenzenden Sonotrode, wobei mittels der Sonotrode nachfolgend der Ausbildung des Schweißknotens während der Ausführung der Schneidbewegung des Messers eine Ultraschallbeaufschlagung des Schweißknotens erfolgt.

Somit wird in bisher nicht bekannter Weise die bei einer Ultraschallschweißvorrichtung eingesetzte Sonotrode nicht nur zur Herstellung des Schweißknotens zwischen zwei miteinander zu verbindenden stabförmigen Leiter in einem Verdichtungsraum der Ultraschallschweißvorrichtung eingesetzt, sondern darüber hinaus auch zur Ultraschallbeaufschlagung des Schweißknotens während der Aktion eines Schlechtteilschneiders.

Wenn dabei die Ultraschallbeaufschlagung mittels der Sonotrode während der Schneidbewegung und eine Rückstellbewegung des Messers erfolgt, kann die Ultraschallbeaufschlagung nicht nur zur Reduzierung der Schnittkraft während der Schneidbewegung genutzt werden, sondern darüber hinaus auch zu einer Reduzierung der für die Rückstellbewegung des Messers erforderlichen Antriebskraft.

Nachfolgend wird eine bevorzugte Ausführungsform des Verfahrens am Beispiel einer mit einem Schlechtteilschneider versehenen, in der Zeichnung dargestellten Ultraschallschweißvorrichtung erläutert.

Es zeigen:
- **Fig. 1**: eine isometrische Darstellung der mit dem Schlechtteilschneider versehen Ultraschallschweißvorrichtung;
- **Fig. 2**: eine Längsschnittdarstellung der in **Fig. 1** dargestellten Vorrichtung;
- **Fig. 3**: eine Teildarstellung der in **Fig. 1** dargestellten Vorrichtung mit isometrischer Darstellung des Verdichtungsraums;
- **Fig. 4**: eine schematische Darstellung des mit einer Messereinrichtung versehenen Schlechtteilschneiders;
- **Fig. 5**: die Messereinrichtung unmittelbar vor Durchführung eines Schneidvorgangs;
- **Fig. 6**: die Messereinrichtung unmittelbar nach Durchführung eines Schneidvorgangs;
- **Fig. 7**: eine Teilschnittdarstellung der Messereinrichtung gemäß Schnittlinienverlauf VII-VII in **Fig. 6** mit Darstellung einer Schneidbewegung des Messers;
- **Fig. 8**: eine Teilschnittdarstellung der Messereinrichtung gemäß Schnittlinienverlauf VII-VII in **Fig. 6** mit Darstellung einer Rückstellbewegung des Messers.

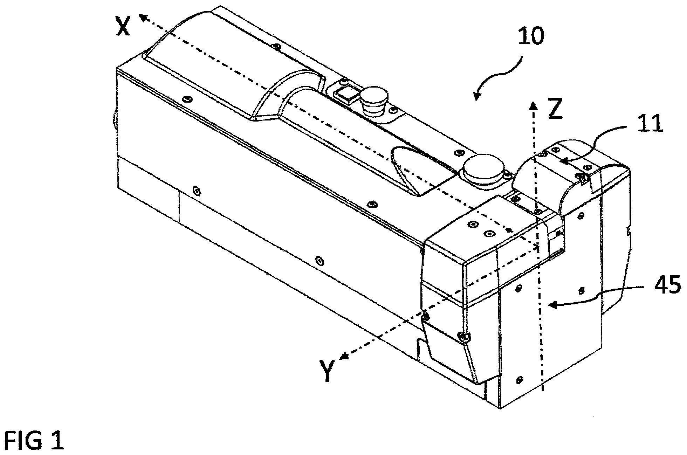

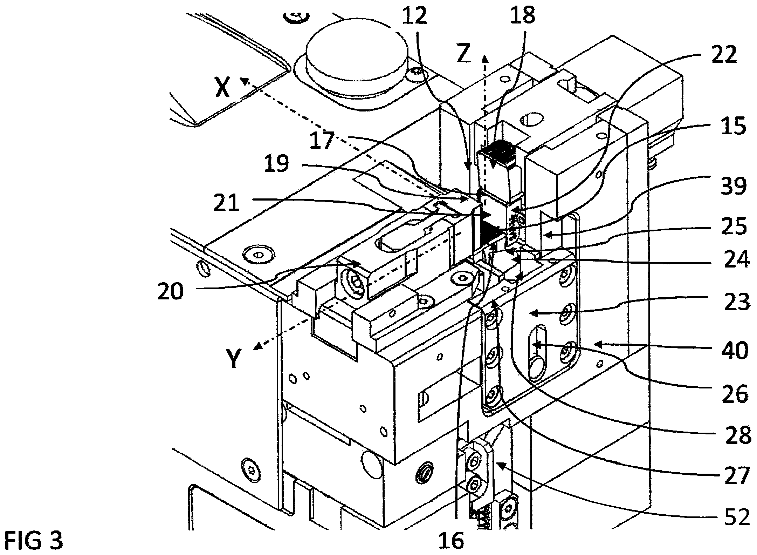

**Fig. 1** zeigt in einer isometrischen Darstellung eine Ultraschallschweißvorrichtung 10, die unter einer Abdeckung 11 eine insbesondere in **Fig. 3** dargestellte, als Verdichtungsraum 12 ausgebildete Aufnahmeeinrichtung aufweist.

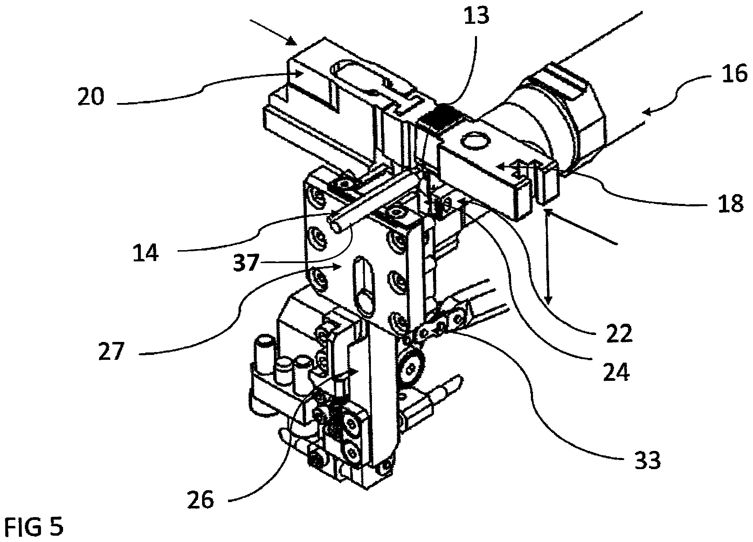

Der Verdichtungsraum 12 dient zur Aufnahme von beispielsweise in **Fig. 5** dargestellten Blankbereichen 13 von elektrischen Leitern 14. Im Bereich der Blankbereich 13 sind die Leiter 14 von ihrer äußeren Isolierung 37 befreit. Wie insbesondere in **Fig. 3** dargestellt, ist der Verdichtungsraum 12 in Richtung einer z-Achse an zwei einander gegenüberliegenden Seiten durch eine Arbeitsfläche 15 einer in die Richtung der x-Achse Ultraschallschwingungen übertragenden Sonotrode 16 und eine Gegenfläche 17 einer häufig auch als Amboss bezeichneten, in Richtung einer y-Achse verfahrbaren Gegenelektrode 18 sowie in Richtung der y-Achse an zwei einander gegenüberliegenden Seiten durch eine Begrenzungsfläche 19 eines in Richtung der y-Achse verfahrbaren Schieberelements 20 und eine Begrenzungsfläche 21 eines häufig auch als Touchierelement bezeichneten Begrenzungselements 22 begrenzt.

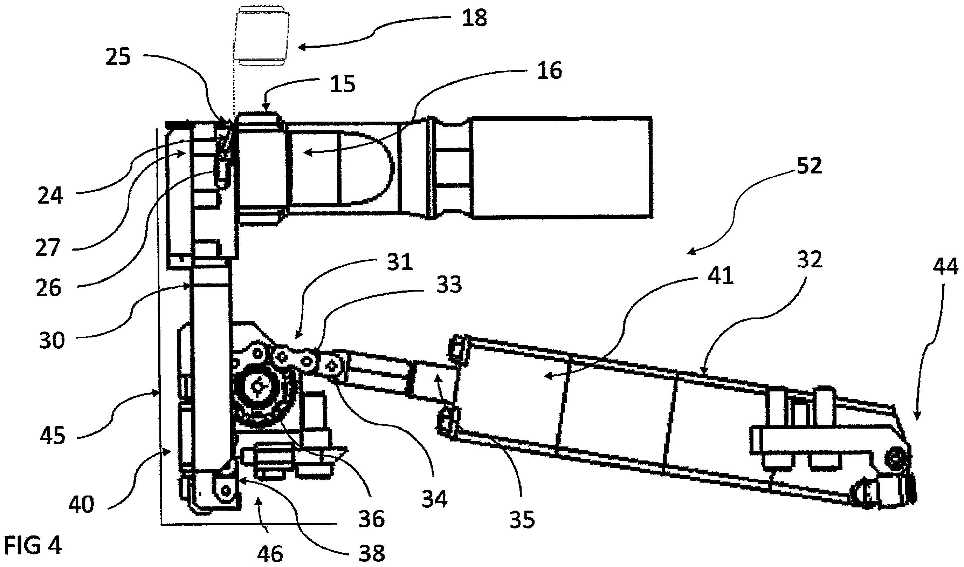

In Richtung einer x-Achse, die im vorliegenden Fall mit der Längsachse der Sonotrode 16 übereinstimmt, ist an den Verdichtungsraum 12 angrenzend ein in seinem Aufbau in **Fig. 4** dargestellter Schlechtteilschneider 52 mit einer Messereinrichtung 23 vorgesehen, die ein in Richtung der z-Achse **(****Fig. 3****)** verfahrbares Messer 24 aufweist. Im Fall des vorliegenden Ausführungsbeispiels ist das Messer 24 über eine Schraubverbindung mit einem Messerhalter 26 verbunden ist. **Fig. 3** zeigt das Messer 24 in der unteren Messerposition, in der sich eine Messerschneidkante 25 unmittelbar unterhalb der Arbeitsfläche 15 der Sonotrode 16 befindet.

Wie insbesondere der **Fig. 3** entnommen werden kann, wird der Messerhalter 26 in einer Führungseinrichtung 27 geführt, die hierzu eine sich in Richtung der z-Achse erstreckende Führungsnut 28 aufweist.

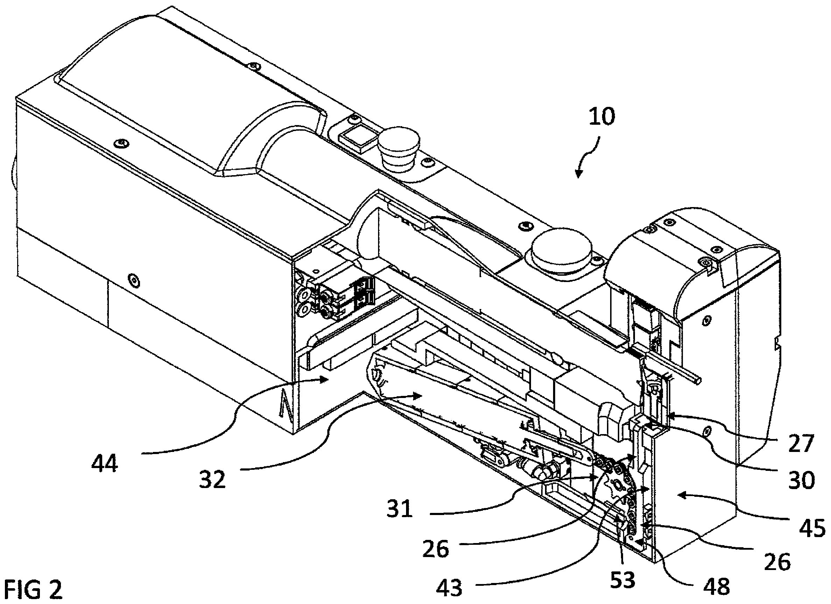

Wie die **Fig. 2** und **4** zeigen, ist der im Falle des vorliegenden Ausführungsbeispiels mit einer Kröpfung 30 versehene Messerhalter 26 über ein als Umlenkgetriebe 31 ausgebildetes Antriebsgetriebe mit einen im Falle des vorliegenden Ausführungsbeispiels als pneumatischer Kraftzylinder 32 ausgebildeten Antriebsmotor verbunden.

Wie insbesondere der schematischen Darstellung in **Fig. 4** zu entnehmen ist, weist das Umlenkgetriebe 31 einen als Kette 33 ausgebildeten Zugmittelstrang auf, dessen Antriebsende 34 mit einer Kolbenstange 35 des Kraftzylinders 32 verbunden ist. Über ein hier als Zahnrad 36 ausgebildetes Umlenkrad erfolgt eine Umlenkung der Kette 33, so dass das Antriebsende 34 der Kette 33 in Richtung der Kolbenstange 35 verläuft und ein Abtriebsende 38, das mit dem Messerhalter 26 verbunden ist, in Richtung der z-Achse verläuft.

Wie insbesondere der **Fig. 3** zu entnehmen ist, ist die Führungseinrichtung 27 als Einsatz ausgebildet, der in eine entsprechende Ausnehmung 39 eines Gehäuseteils 40 der Ultraschallschweißvorrichtung 10 eingesetzt ist.

Im Betrieb der Vorrichtung erfolgt nach einem Einlegen der Blankbereiche 13 der miteinander zu verbindenden Leiter 14 in den Verdichtungsraum 12 ein Schließen des Verdichtungsraums 12, wobei die Gegenelektrode 18 in Richtung der y-Achse und das Schieberelement 20 in entgegengesetzter Richtung der y-Achse verfahren wird, so dass, wie in **Fig. 5** dargestellt, der Verdichtungsraum 12 geschlossen ist und die Blankbereiche 13 der Leiter 14 definiert aneinander anliegen. Anschließend erfolgt eine Beaufschlagung der Blankbereiche 13 mit mechanischen Schwingungen der Sonotrode 16, derart, dass in einem Reibschweißvorgang eine Komprimierung und Verbindung der Blankbereiche 13 miteinander zur Ausbildung eines Schweißknotens 47 erfolgt.

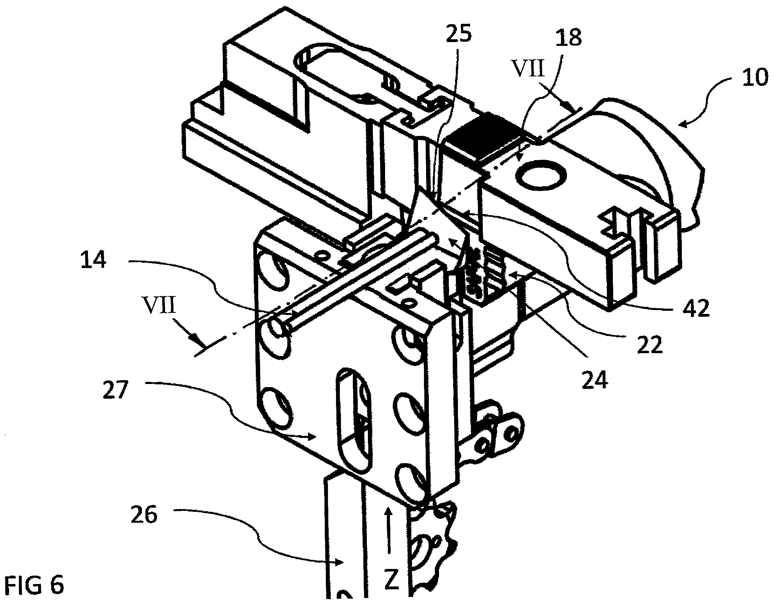

Im Falle der Detektierung eines fehlerhaften Schweißparameters oder einer fehlerhaften Geometrie des hergestellten Schweißknotens 47 wird bei noch geschlossenem Verdichtungsraum die Messereinrichtung 23 des Schlechtteilschneiders 52 aktiviert, derart, dass der Kraftzylinder 32, der im Falle des vorliegenden Ausführungsbeispiels, wie in **Fig. 4** dargestellt, aus vier in Reihe angeordneten Kraftzylinderelementen 41 zusammengesetzt ist, mit Druckluft beaufschlagt wird, so dass über das Umlenkgetriebe 31 das Messer 24 in Richtung der z-Achse nach oben bewegt wird und, wie in **Fig. 6** dargestellt, ein Teil der Blankbereiche 13 der eine an der Gegenelektrode 18 ausgebildete Gegenschneidkante 42 überragt, von den Leitern 14 abgetrennt wird, wenn die Messerschneidkante 25 in einer Schneidbewegung an der Gegenschneidkante 42 vorbei bewegt wird.

Wie insbesondere aus der **Fig. 2** ersichtlich, ist zur Ausführung einer Rückstellbewegung 49 des Messers 24 nach Ausführung der Schneidbewegung 48 eine Federeinrichtung 43 vorgesehen, die zwischen dem Messerhalter 26 und der Führungseinrichtung 27 angeordnet ist und im Falle des vorliegenden Ausführungsbeispiels als Druckfeder ausgeführt ist. Zur Detektierung eines oberen und eines unteren Endpunkts der Schneidbewegung des Messers 24 sind Sensoren 53 vorgesehen, wobei in **Fig. 2** lediglich der unter Sensor 53 dargestellt ist, der im vorliegenden Fall als induktiver Sensor ausgeführt ist und mit einem Nocken 48 des Messerhalters 26 zusammenwirkt.

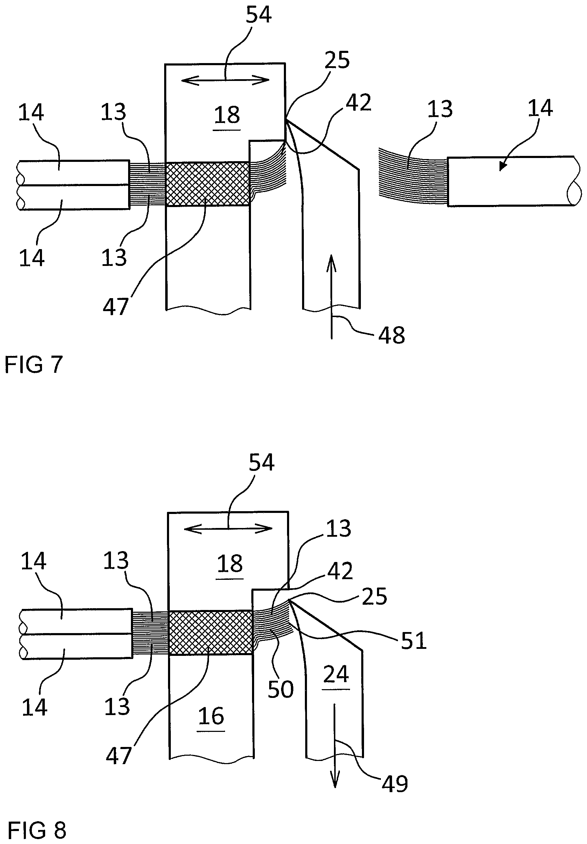

In den **Fig. 7** und **8** ist ein Schneidvorgang dargestellt, bei dem nach Herstellung des als Verteilerknoten zwischen insgesamt drei Leitern 14 ausgebildeten Schweißknotens 47 der Blankbereich 13 des in den **Fig. 7** und **8** rechten Leiters 14 zur Trennung von den im Schweißknoten 47 miteinander verbunden Blankbereichen 13 der linken Leiter 14 durchtrennt wird.

Während der in **Fig. 7** dargestellten Schneidbewegung 48 des Messers 24 und der in **Fig. 8** dargestellten Rückstellbewegung 49 des Messers 24 erfolgt eine Beaufschlagung des Schweißknotens 47 mit mechanischen Schwingungen der Sonotrode 16, so dass die Schneidbewegung 48 und auch die Rückstellbewegung 49 des Messers 24 mit reduzierter Antriebskraft erfolgen kann. Dabei kann die Ultraschallbeaufschlagung permanent während der Bewegung des Messers 24 erfolgen oder in zwei zeitlich getrennten Ultraschallbeaufschlagungsphasen, so dass während der Schneidbewegung 48 des Messers 24 eine erste Beaufschlagungsphase erfolgt und anschließend die Ultraschallbeaufschlagung abgeschaltet wird, und während der Rückstellbewegung 49 des Messers die Ultraschallbeaufschlagung während einer zweiten Beaufschlagungsphase wieder aktiviert wird.

Die **Fig. 7** und **8** zeigen jeweils eine benachbart zum Schweißknoten 47 ausgebildete Schnittstelle im Blankbereich 13 des rechten Leiters 14, wobei die Schnittstelle eine Vielzahl in Folge der vorausgegangenen Schneidbewegung 48 durchtrennte Adern 50 des Leiters 14 aufweist. Wie zu erkennen ist, sind die einzelnen Adern 50 in Folge der Schneidbewegung 48 in Richtung der Schneidbewegung 48 aufgebogen und weisen an der Schnittstelle im Vergleich zum Schweißknoten 47, in dem die Adern 50 komprimiert gegeneinander anliegen, einen vergrößerten Abstand zueinander auf, so dass die einzelnen Adern 50 mit ihren Schnittenden 51 eine Vielzahl von elastischen Widerständen gegen die Rückstellbewegung 49 des Messers 24 ausbilden, wenn dieses, wie in **Fig. 8** angedeutet, mit der Messerschneidkante 25 an diesen vorbei bewegt wird.

In Folge der Ultraschallbeaufschlagung des Schweißknotens 47 und der daraus resultierenden hin- und hergehenden Relativbewegung 54 der Gegenschneidkante 42 während der Rückstellbewegung des Messers 24 werden die durch die einzelnen Schnittenden 51 der Adern 50 auf das Messer 24 wirkenden Reaktionskräfte reduziert, da die einzelnen Adern mit der Frequenz der Ultraschallbeaufschlagung temporär entlastet werden.

Der vorstehend erläuterte Effekt hat zur Folge, dass nicht nur wie bereits ausgeführt, die erforderliche Antriebskraft zur Ausführung der Schneidbewegung 48 des Messers 24 reduziert wird, sondern darüber hinaus auch in Folge der Ultraschallbeaufschlagung des Schweißknotens 47 während der Rückstellbewegung des Messers 24 die zur Ausführung der Rückstellbewegung 49 erforderliche Antriebskraft des Messers 24 reduziert wird, die aufgebracht werden muss, um das Messer 24 an den Schnittenden 51 vorbei und zurück in seine Ausgangsstellung zur Ausführung einer erneuten Schneidbewegung zu überführen.

## Patentansprüche

1. Verfahren zum Schneiden von vorzugsweise als stabförmiger Körper ausgebildetem Schneidgut mit einer Aufnahmeeinrichtung zur fixierten Aufnahme des Schneidguts, derart, dass ein abzutrennender Teil des Schneidguts eine als Gegenschneidkante (42) ausgebildete Körperkante der Aufnahmeeinrichtung überragt, und mit einer Messereinrichtung (23) mit einem relativ zur Aufnahmeeinrichtung bewegbaren Messer (24), das eine Messerschneidkante (25) zur Ausführung eines Trennschnitts in einer Schneidbewegung (48) an der Gegenschneidkante (42) vorbei bewegt wird,
**dadurch gekennzeichnet,**
**dass** das Schweißgut zur Ausführung von Schwingungen während der Schneidbewegung (48) mit Ultraschall beaufschlagt wird.

2. Verfahren nach Anspruch 1,
**dadurch gekennzeichnet,**
**dass** die Ultraschallbeaufschlagung des Schneidguts mittelbar über eine Ultraschallbeaufschlagung der Aufnahmeeinrichtung erfolgt.

3. Verfahren nach Anspruch 1 oder 2,
**dadurch gekennzeichnet,**
**dass** die Ultraschallbeaufschlagung quer zur Richtung der Schneidbewegung (48) erfolgt.

4. Verfahren nach einem der vorangehenden Ansprüche,
**dadurch gekennzeichnet,**
**dass** der stabförmige Körper als Faserbündel oder Aderbündel ausgebildet ist.

5. Verfahren nach einem der vorangehenden Ansprüche,
**dadurch gekennzeichnet,**
**dass** die Aufnahmeeinrichtung als Verdichtungsraum (12) zur Aufnahme von miteinander zu einem Schweißknoten (47) zu verbindenden Blankbereichen (13) von stabförmigen Leitern (14) ausgebildet ist, mit einer zur Ultraschallbeaufschlagung der Blankbereiche (13) den Verdichtungsraum (12) begrenzenden Sonotrode (16), wobei mittels der Sonotrode (16) nachfolgend der Ausbildung des Schweißknotens (47) während der Ausführung der Schneidbewegung (48) des Messers (24) eine Ultraschallbeaufschlagung des Schweißknotens (47) erfolgt.

6. Verfahren nach Anspruch 5,
**dadurch gekennzeichnet,**
**dass** die Ultraschallbeaufschlagung mittels der Sonotrode (16) während der Schneidbewegung und einer Rückstellbewegung (49) des Messers (24) erfolgt.

## Claims

1. A method for cutting material to be cut, which is preferably realized as a rod-shaped element, comprising a receiving device for fixedly receiving the material to be cut in such a manner that a part to be separated from the material to be cut protrudes over an element edge of the receiving device realized as a counter knife edge (42), and comprising a knife unit (23) having a knife (24), which is movable with respect to the receiving device and which moves a knife edge (25) past the counter knife edge (42) in a cutting movement (48) for executing a separating cut,
**characterized in that**
the welding material is subjected to ultrasound for executing oscillations during the cutting movement (48).

2. The method according to claim 1,
**characterized in that**
the material to be cut to is subjected to ultrasound indirectly by subjecting the receiving device to ultrasound.

3. The method according to claim 1 or 2,
**characterized in that**
the subjection to ultrasound occurs transversely to the cutting movement (48).

4. The method according to any one of the preceding claims,
**characterized in that**
the rod-shaped element is realized as a fiber bundle or a wire bundle.

5. The method according to any one of the preceding claims,
**characterized in that**
the receiving device is realized as a compacting space (12) for receiving blank portions (13) of rod-shaped conductors (14) to be connected to one another to form a weld node (47) comprising a sonotrode (16) which delimits the compacting space (12) for subjecting the blank portions (13) to ultrasound, said weld node (47) being subjected to ultrasound by means of the sonotrode (16) following the formation of the weld node (47) while executing the cutting movement (48) of the knife (24).

6. The method according to claim 5,
**characterized in that**
the subjection to ultrasound occurs during the cutting movement and a return movement (49) of the knife (24) by means of the sonotrode (16).

## Revendications

1. Procédé pour couper de matériau à couper, qui est de préférence réalisé comme corps en forme de tige, comprenant un dispositif de réception pour recevoir le matériau à couper de façon fixe de manière qu'une partie à séparer du matériau à couper fait saillie sur une arête du corps du dispositif de réception qui est réalisée comme arête de contre-couteau (42), et comprenant un moyen de couteau (23) ayant un couteau (24) qui est déplaçable par rapport au dispositif de réception et déplace une arête de couteau (25) au-delà de l'arête de contre-couteau (42) dans un mouvement de coupe (48) pour exécuter une coupe de séparation,
**caractérisé en ce que**
le matériau à souder est soumis aux ultrasons pour exécuter des oscillations pendant le mouvement de coupe (48).

2. Procédé selon la revendication 1,
**caractérisé en ce que**
le matériau à couper est indirectement soumis aux ultrasons en soumettant le dispositif de réception aux ultrasons.

3. Procédé selon la revendication 1 ou 2,
**caractérisé en ce que**
la soumission aux ultrasons est effectué transversalement à la direction du mouvement de coupe (48).

4. Procédé selon l'une quelconque des revendications,
**caractérisé en ce que**
le corps en forme de tige est réalisé comme faisceau de fibres ou faisceau de conducteurs.

5. Procédé selon l'une quelconque des revendications,
**caractérisé en ce que**
le dispositif de réception est réalisé comme espace de compression (12) pour recevoir des parties nues (13) des conducteurs (14) en forme de tige destinées à être connectées les unes aux autres pour former un nœud de soudure (47) comprenant une sonotrode (16) qui délimite l'espace de compression (12) pour soumettre les parties nues (13) aux ultrasons, ledit nœud de soudure (47) étant soumis aux ultrasons au moyen de la sonotrode (16) après la formation du noeud de soudure (47) pendant l'exécution du mouvement de coupe (48) du couteau (24).

6. Procédé selon la revendication 5,
**caractérisé en ce que**
la soumission aux ultrasons au moyen de la sonotrode (16) est effectuée pendant le mouvement de coupe et un mouvement de remise (49) du couteau (24).
